(19) **Europäisches Patentamt / European Patent Office / Office européen des brevets**

(11) **EP 3 795 952 B1**

(12) **EUROPEAN PATENT SPECIFICATION**

(45) Date of publication and mention
of the grant of the patent:
**20.05.2026 Bulletin 2026/21**

(21) Application number: **20159503.0**

(22) Date of filing: **26.02.2020**

(51) International Patent Classification (IPC):
**G01C 21/30** (2006.01)

(52) Cooperative Patent Classification (CPC):
**G01C 21/30; G05D 1/024; G05D 1/0246;
G05D 1/0274**

(54) **ESTIMATION DEVICE, ESTIMATION METHOD, AND COMPUTER PROGRAM PRODUCT**

SCHÄTZVORRICHTUNG, SCHÄTZVERFAHREN UND COMPUTERPROGRAMMPRODUKT

DISPOSITIF D'ESTIMATION, PROCÉDÉ D'ESTIMATION ET PRODUIT PROGRAMME
INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2019 JP 2019168061**

(43) Date of publication of application:
**24.03.2021 Bulletin 2021/12**

(73) Proprietors:
• **Kabushiki Kaisha Toshiba
Kawasaki-shi, Kanagawa 212-0013 (JP)**
• **Toshiba Electronic Devices & Storage
Corporation
Tokyo, 105-0023 (JP)**

(72) Inventors:
• **Sugiura, Takayuki
Tokyo, 105-0023 (JP)**
• **Watanabe, Tomoki
Tokyo, 105-0023 (JP)**
• **Seki, Akihito
Tokyo, 105-0023 (JP)**

(74) Representative: **Hoffmann Eitle
Patent- und Rechtsanwälte PartmbB
Arabellastraße 30
81925 München (DE)**

(56) References cited:
**EP-A2- 2 416 118         WO-A1-2009/098154
US-A1- 2008 243 378     US-A1- 2014 297 093**

**Description**

FIELD

Arrangements described herein relate generally to an estimation device, an estimation method, and a computer program product.

BACKGROUND

In autonomous driving and driver assistance, estimating the self-location of a vehicle in a map is expected to contribute to sophisticated determination using information linked to the map and to highly accurate motion estimation of the vehicle. In the field of robots, the self-location in a map can be used for tracking a preset movement path. Conventionally, there is a known technique that collates a landmark observed by a sensor mounted on a moving object with a landmark at a known position registered in a map database in advance and estimates the self-location in a map of the moving object as position of the sensor with less inconsistency in observation of landmarks.

US 2008/243378 A1 describes a navigation system for use in a vehicle. The system includes an absolute position sensor, such as GPS, in addition to one or more additional sensors, such as a camera, laser scanner, or radar. The system further comprises a digital map or database that includes records for at least some of the vehicle's surrounding objects. These records can include relative positional attributes and traditional absolute positions. As the vehicle moves, sensors sense the presence of at least some of these objects, and measure the vehicle's relative position to those objects. This information, together with the absolute positional information and the added map information, is used to determine the vehicle's location, and support features such as enhanced driving directions, collision avoidance, or automatic assisted driving. In accordance with an embodiment, the system also allows some objects to be attributed using relative positioning, without recourse to storing absolute position information.

US 2014/297093 A1 describes an autonomous vehicle including: a first sensor which obtains environmental information on surrounding environment of the autonomous vehicle; and a control unit which controls a drive unit based on a self position. The control unit includes: a first estimation unit which calculates a first estimate value indicating an estimated self position, by estimation using a probabilistic method based on the environmental information; and a second estimation unit which calculates a second estimate value indicating an estimated self position, by estimation using a matching method based on the environmental information, and the control unit changes, according to the first estimate value, a second estimate range for the calculating of the second estimate value by the second estimation unit, and controls the drive unit using the second estimate value as the self position.

Unfortunately, it is difficult for the conventional technique to improve the accuracy in estimation processing in a situation in which erroneous correspondence may occur in the collation of landmarks.

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention.

BRIEF DESCRIPTION OF THE DRAWINGS

FIG. 1 is a diagram illustrating an example of a moving object in a first arrangement;
FIG. 2 is a diagram illustrating an example of the functional configuration of the moving object in the first arrangement;
FIG. 3 is a diagram illustrating an example of first position information in the first arrangement;
FIG. 4A is a diagram for explaining an operation example of an estimation unit in the first arrangement;
FIG. 4B is a diagram illustrating an example of a weight matrix corresponding to the correspondence in FIG. 4A;
FIG. 5A is a diagram for explaining an estimation result of the estimation unit in the first arrangement;
FIG. 5B is a diagram illustrating an example of a weight matrix corresponding to the estimation result in FIG. 5A;
FIG. 6 is a flowchart illustrating an example of an estimation method in the first arrangement;
FIG. 7 is a diagram illustrating an example of the functional configuration of the moving object in a second arrangement;
FIG. 8 is a diagram illustrating an example of first position information in the second arrangement;
FIG. 9A is a diagram illustrating a first example of first landmarks limited by a limitation unit in the second arrangement;
FIG. 9B is a diagram illustrating a second example of first landmarks limited by the limitation unit in the second arrangement;
FIG. 9C is a diagram illustrating a third example of first landmarks limited by the limitation unit in the second arrangement;

FIG. 10A is a diagram illustrating an example of a weight matrix corresponding to the correspondence in FIGS. 9A to 9C;

FIG. 10B is a diagram illustrating an example of a weight matrix corresponding to the estimation result of the estimation unit in the second arrangement;

FIG. 11 is a flowchart illustrating an example of an estimation method in the second arrangement;

FIG. 12 is a flowchart illustrating an example of an estimation method in a third arrangement; and

FIG. 13 is a diagram illustrating an example of the hardware configuration of the estimation device in the first to third arrangements.

DETAILED DESCRIPTION

The estimation device, the estimation method, and the computer program according to arrangements will be described below with reference to the accompanying drawings.

First Arrangement

An estimation device in a first arrangement is mounted on, for example, a moving object.

Example of Moving object

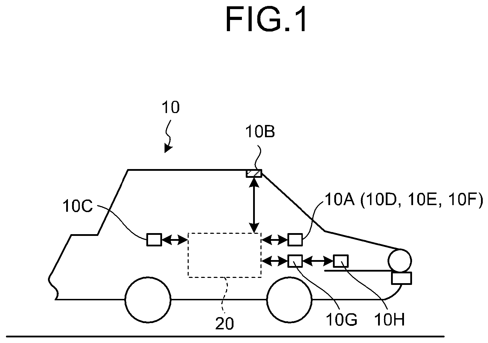

FIG. 1 is a diagram illustrating an example of a moving object 10 in the first arrangement.

The moving object 10 includes an estimation device 20, an output unit 10A, a camera 10B, a sensor 10C, a power control unit 10G, and a power unit 10H.

The moving object 10 may be any moving object. Examples of the moving object 10 include a vehicle, a carriage, and a movable robot. Examples of the vehicle include a motorcycle, an automobile, and a bicycle. The moving object 10 may be, for example, a moving object running through a human driving operation or may be a moving object capable of automatically driving (autonomous driving) without a human driving operation.

The estimation device 20 is implemented, for example, by dedicated or general-purpose computer hardware. The estimation device 20 estimates the location indicating at least one of the position and the pose of the moving object 10. Specifically, the estimation device 20 checks the correspondence between a landmark (second landmark) observed by the camera 10B and a landmark (first landmark) registered in map data simultaneously when estimating the location of the moving object 10 in time series. This configuration enables robust self-location estimation with ambiguous correspondence of landmarks.

The estimation device 20 is not necessarily mounted on the moving object 10. The estimation device 20 may be mounted on a stationary object. The stationary object is, for example, an object unable to move, such as an object fixed to the ground. Examples of the stationary object fixed to the ground include a guard rail, a pole, a parked vehicle, and a road sign. For example, the stationary object is an object stationary relative to the ground. The estimation device 20 may be installed in a cloud server that executes processing on a cloud system.

The power unit 10H is a drive device mounted on the moving object 10. Examples of the power unit 10H include an engine, a motor, and a wheel.

The power control unit 10G controls the power unit 10H. The power unit 10H is driven under the control of the power control unit 10G.

The output unit 10A outputs information. In the first arrangement, the output unit 10A outputs estimation result information indicating the estimation result of motion of the camera 10B estimated by the estimation device 20.

The output unit 10A includes, for example, a communication function of transmitting estimation result information, a display function of displaying estimation result information, and a sound output function of outputting sound indicating estimation result information. The output unit 10A includes, for example, at least one of a communication unit 10D, a display 10E, and a speaker 10F. In the first arrangement, the output unit 10A includes the communication unit 10D, the display 10E, and the speaker 10F, by way of example.

The communication unit 10D transmits estimation result information to another device. For example, the communication unit 10D transmits estimation result information to another device through a communication line. The display 10E displays information on the estimation result. Examples of the display 10E include a liquid crystal display (LCD), a projector, and a light. The speaker 10F outputs sound indicating information on the estimation result.

Examples of the camera 10B include a monocular camera, a stereo camera, a fisheye camera, and an infrared camera. Any number of cameras 10B may be provided. The image taken may be a color image composed of three channels R, G, and B or may be a monochrome image of one channel represented by gray scales. The camera 10B captures time-series images of the neighborhood of the moving object 10. The camera 10B captures time-series images, for example, by capturing images of the neighborhood of the moving object 10 in time series. The neighborhood of the moving object 10 is, for example, a region in a predetermined range from the moving object 10. This range is, for example, a range that can be imaged by the camera 10B.

In the first arrangement, the camera 10B is installed such that the front of the moving object 10 is included as the imaging direction. That is, in the first arrangement, the camera 10B captures images of the front of the moving object 10 in time series.

The sensor 10C is a sensor that measures measurement information. Examples of the measurement information include the speed of the moving object 10 and the steering angle of the steering wheel of the moving object 10. Examples of the sensor 10C include an inertial measurement unit (IMU), a speed sensor, and a steering angle sensor. The IMU measures measurement information including three-axis acceleration and three-axis angular velocity of the moving object 10. The speed sensor measures the speed from the amount of rotation of a wheel. The steering angle sensor measures the steering angle of the steering wheel of the moving object 10. For example, the sensor 10C is a depth distance sensor that measures the distance to an object, such as a LiDAR (light detection and ranging, or laser imaging detection and ranging).

An example of the functional configuration of the moving object 10 in the first arrangement will now be described in detail.

Example of Functional Configuration

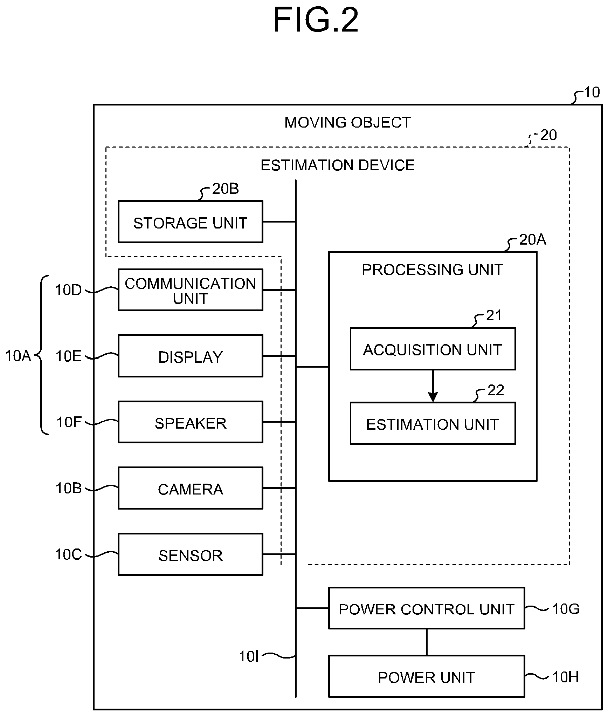

FIG. 2 is a diagram illustrating an example of the functional configuration of the moving object 10 in the first arrangement.

The moving object 10 includes an estimation device 20, an output unit 10A, a camera 10B, a sensor 10C, a power control unit 10G, and a power unit 10H. The estimation device 20 includes a processing unit 20A and a storage unit 20B. The output unit 10A includes a communication unit 10D, a display 10E, and a speaker 10F.

The processing unit 20A, the storage unit 20B, the output unit 10A, the camera 10B, the sensor 10C, and the power control unit 10G are connected through a bus 10I. The power unit 10H is connected to the power control unit 10G.

The output unit 10A (the communication unit 10D, the display 10E, and the speaker 10F), the camera 10B, the sensor 10C, the power control unit 10G, and the storage unit 20B may be connected through a network. The communication system of the network used for the connection may be wired or may be wireless. The network used for the connection may be implemented by a combination of a wired system and a wireless system.

Examples of the storage unit 20B include a semiconductor memory device, a hard disk, and an optical disc. Examples of the semiconductor memory device include a random access memory (RAM) and a flash memory. The storage unit 20B may be a storage device provided on the outside of the estimation device 20. The storage unit 20B may be a storage medium. Specifically, the storage medium may store or temporarily store a computer program and a variety of information downloaded through a local area network (LAN) or the Internet. The storage unit 20B may be configured with a plurality of storage media.

The storage unit 20B stores, for example, first position information indicating at least one of the position of and the pose of a first landmark in a map. The first position information is stored, for example, in a map database indicating a position in map. The position of the first landmark may be represented by a point in a map or may be represented by any form such as a set of points, a rectangle, and a known shape model.

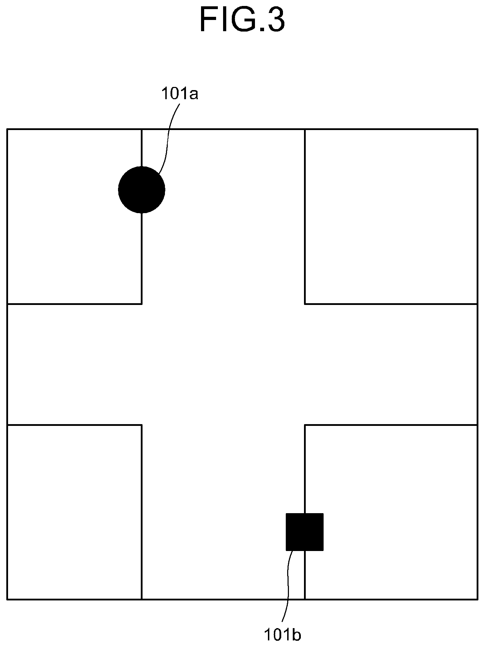

FIG. 3 is a diagram illustrating an example of the first position information in the first arrangement. The example of the first position information in FIG. 3 indicates the positions in a map of first landmarks 101a and 101b. Hereinafter the first landmarks 101a and 101b are simply referred to as a first landmark 101 when not distinguished from each other.

The first landmark 101 is preferably a target whose position can be registered in a coordinate system of a map database and that is present at the same position without moving when observed by the camera 10B and the sensor 10C. The first landmark 101 is preferably a target fixed to a road, for example, a road structure such as a road signal, a traffic sign, a road marking, and a pole, or a signboard. A target that is essentially movable can be used as the first landmark 101 if it is assured in advance that the target is not moving between the creation of a map database and the observation or if it can be verified that the target is not moving. A specific marker that can be installed by the user in the environment may be used as the first landmark 101.

The first position information may be defined by an absolute coordinate system with latitude and longitude or may be defined by any coordinate system in which a specific position serves as a reference of coordinates.

Returning to FIG. 2, the processing unit 20A includes an acquisition unit 21 and an estimation unit 22.

The acquisition unit 21 acquires second position information indicating at least one of the position and the pose of a second landmark around the moving object 10. The acquisition unit 21 acquires second position information, for example, from an image captured by the camera 10B. For example, the acquisition unit 21 acquires second position information from data acquired by the sensor 10C.

The estimation unit 22 accepts the second position information from the acquisition unit 21 and reads the first position information from the storage unit 20B. The estimation unit 22 then estimates third position information indicating at least one of the position in a map and the pose of the moving object 10 and correspondence between the first landmark and the second landmark, based on the first position information and the second position information. The detail of the processing by the estimation unit 22 will be described later.

For example, the processing unit 20A may be implemented by allowing a processor such as a central processing unit (CPU) to execute a computer program, that is, by software. For example, the processing unit 20A may be implemented by one or more processors such as a dedicated integrated circuit (IC), that is, by hardware. For example, the processing unit 20A may be implemented by software and hardware in combination.

The term "processor" used in the present arrangement includes CPU, graphical processing unit (GPU), application specific integrated circuit (ASIC), and programmable logic device. Examples of the programmable logic device include simple programmable logic device (SPLD), complex programmable logic device (CPLD), and field programmable gate array (FPGA).

The processor reads and executes a computer program stored in the storage unit 20B to implement the processing unit 20A. A computer program may be directly built in a circuit of the processor, rather than storing a computer program in the storage unit 20B. In this case, the processor reads and executes the computer program built in the circuit to implement the processing unit 20A.

Some of the functions of the moving object 10 illustrated in FIG. 2 may be provided in another device. For example, the camera 10B and the sensor 10C may be mounted on the moving object 10, and the estimation device 20 may be operated as a server device installed on the outside of the moving object 10. In this case, the communication unit 10D transmits data observed by the camera 10B and the sensor 10C to the server device.

Operation Example of Estimation Unit

The details of the operation of the estimation unit 22 will now be described.

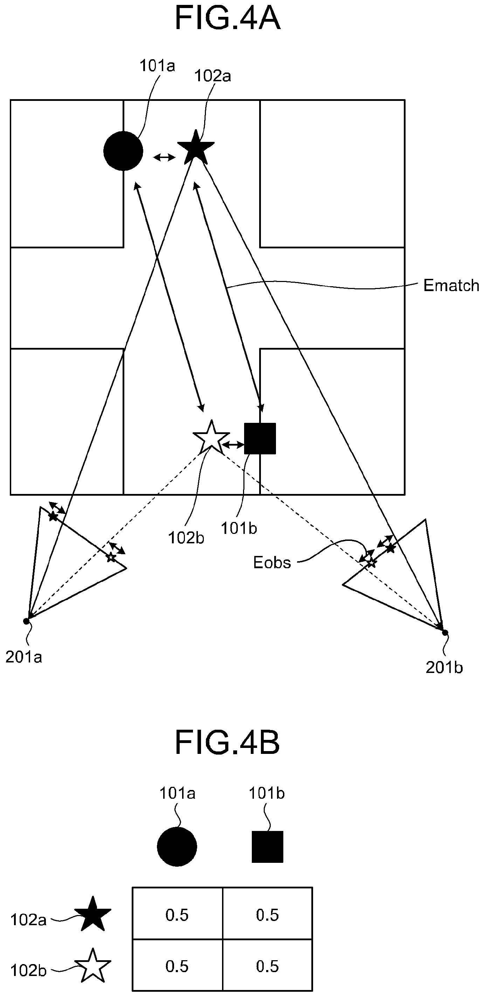

FIG. 4A is a diagram for explaining an operation example of the estimation unit 22 in the first arrangement. In the example in FIG. 4A, first landmarks 101a and 101b and second landmarks 102a and 102b are present. A case where the second landmarks 102a and 102b are observed at observation positions 201a and 201b is described by way of example.

First, the camera 10B mounted on the moving object 10 observes the second landmarks 102a and 102b, at the observation positions 201a and 201b. The second position information of the second landmarks 102a and 102b is represented by a local coordinate system (image coordinates) defined in the moving object 10. Hereinafter the second landmarks 102a and 102b are simply referred to as second landmark 102 when they are not distinguished from each other.

Here, the sensor may be any sensor that can observe a target retained as the first landmark 101 in the map database, as the second landmark 102. As described above, an image may be acquired using the camera 10B, or the sensor 10C that measures the distance to an object, such as LiDAR, may be used.

Any method may be used to detect the second landmark 102 from sensor data. When the sensor data is an image, for example, a feature point detecting method or specific object recognition by a convolutional neural network (CNN) may be used.

The positional relation of the second landmark 102 may be represented, for example, by a pixel position in an image. For example, the positional relation of the second landmark 102 may be represented by the observation direction of the second landmark 102 relative to the position and pose of the moving object 10, like the direction and the distance in a depth distance sensor.

In the first arrangement, the second landmark 102 is observed with a point of coordinates defined in sensor data. However, the second landmark 102 may be observed with a set of points, a rectangle, a known shape model, and the like. The second landmark 102 may be represented in any form that can be collated with the first position information as long as an observation error $E_{obs}$ and a matching error $E_{match}$ described later can be calculated.

The estimation unit 22 estimates third position information indicating at least one of the position in map and the pose of the moving object 10 and correspondence between the first landmark 101 and the second landmark 102, based on the first position information of the first landmark 101 and the second position information of the second landmark 102.

Specifically, the estimation unit 22 reduces the sum E of an observation error $E_{obs}$ from observation information V of the second landmark 102 using the position / pose P in map of the moving object 10 and a matching error $E_{match}$ from map data M including the first landmark 101, for a three-dimensional point L indicating a position in map of the second landmark 102, using Equation (1) below.

$$E(P,\ L,\ W|M,\ V)\ =\ E_{obs}(P,\ L|V)\ +\ E_{match}(L,\ W|M) \qquad (1)$$

Here, the observation information V is second position information represented, for example, by the coordinates of an image observed by the camera 10B. W is a variable indicating correspondence between the first landmark 101 and the second landmark 102.

The observation error $E_{obs}$ represents the difference between observation information v when the second landmark 102 is observed again based on the estimated position in map and observation information V actually observed by the camera 10B, in the estimated position pose of the moving object 10. For example, the estimation unit 22 evaluates the observation error $E_{obs}$ by a re-projection error which is an error between the projection position when the three-dimensional point L in map of the second landmark 102 is projected onto a two-dimensional image plane using a camera model and the detected position of the second landmark 102 detected from an image (second position information), and reduces (optimizes) the re-projection error.

The observation error $E_{obs}$ is not limited to the re-projection error, as long as the error between the observation information v, calculated based on the estimated position pose of the moving object 10 and the position of the second landmark 102, and the actual observation information V can be evaluated. For example, the observation error $E_{obs}$ may be evaluated by the angle formed by vectors indicating the direction of the second landmark 102 or may be evaluated by the degree of agreement based on the degree of overlapping of the projected shape model.

The matching error $E_{match}$ indicates which first landmark 101 is matched with each second landmark 102 and the difference from the matched first landmark 101. For example, the estimation unit 22 sets the correspondence W as a weight matrix represented by the weight of correspondence to the first landmark 101 included in the map database, for each of the second landmarks.

FIG. 4B is a diagram illustrating an example of the weight matrix corresponding to the correspondence in FIG. 4A. In the example in FIG. 4B, a weight 0.5, which is the same in all the combinations, is used. The estimation unit 22 evaluates the distance between the position by a linear sum obtained by combining the position in map of the first landmark 101 registered in the map database with the weight matrix and the position of the second landmark 102 as a matching error $E_{match}$ and reduces (optimizes) the distance.

Here, the position used for evaluating the distance is any position calculated from the position registered in the map database and may be a three-dimensional point, a two-dimensional point projected on a certain plane, or a latitude and longitude representation. The position for obtaining an error is calculated by the linear sum of the position of the first landmark 101. However, any position may be used as long as the position of the first landmark 101 matched with the second landmark 102 can be referred to. For example, a certain first landmark 101 may be weighted by Softmax, or the first landmark 101 may be weighted using a nonlinear function

In the first arrangement, depending on the weight of matching, a second landmark 102 may be matched with a plurality of first landmarks 101. However, a constraint may be imposed such that one first landmark 101 is matched with one second landmark 102. More specifically, the estimation unit 22 estimates the correspondence by setting a one-to-one correspondence between the second landmark 102 and the first landmark 101.

Although the distance between two positions is used as the error, the difference between shapes may be used when shape models are available, or an error represented in any form may be used as long as the difference between the first landmark 101 and the second landmark 102 matched with each other can be evaluated.

Although a mode in which the variable of correspondence W is represented as a weight matrix has been illustrated, the variable of correspondence W may be in any form other than a weight matrix as long as the correspondence between the first landmark 101 and the second landmark 102 can be represented. For example, a pair of the first landmark 101 and the second landmark 102 matched with each other may be retained, where overlapping is permitted. For example, a method such as the Levenberg-Marquardt method may be used as the method of optimizing the error.

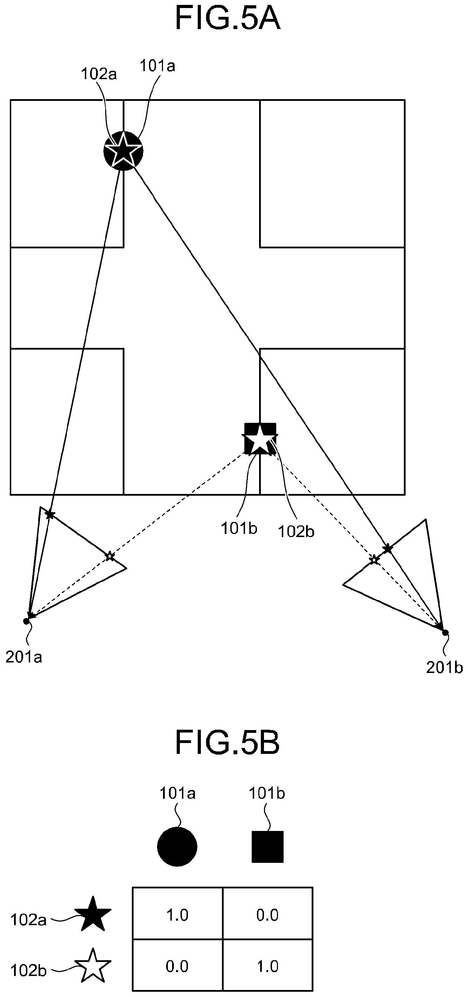

FIG. 5A is a diagram for explaining an estimation result of the estimation unit 22 in the first arrangement. FIG. 5A illustrates an estimation result obtained by reducing the observation error $E_{obs}$ when the second landmark 102 is re-projected on the camera 10B and the matching error $E_{match}$ between the first landmark 101 and the second landmark 102.

FIG. 5B is a diagram illustrating an example of the weight matrix corresponding to the estimation result in FIG. 5A. In the example in FIG. 5B, the first landmark 101a and the second landmark 102a are matched by a correspondence weight 1. The first landmark 101b and the second landmark 102b are matched by a correspondence weight 1. The correspondence between the first landmark 101a and the second landmark 102b and the correspondence between the first landmark 101b and the second landmark 102a are discarded by reducing $E_{obs}$ together because of inconsistency between the positional relation and the observation (weight 0).

In the description of FIGS. 4A and 5A, an example of the two-dimensional operation on a plane has been illustrated for the sake of simplicity. However, the optimization may be performed in a three-dimensional space. The optimization may be performed with map data of a plane with a constant height and the position pose in a coordinates system such as three dimensions.

The method of estimating a three-dimensional position of the second landmark 102 using measurement at a plurality of places by one camera 10B has been described. However, a plurality of cameras 10B may be mounted on the moving object 10. The depth may be directly estimated from an image captured by one camera 10B, or the depth may be measured by the sensor 10C such as a depth distance sensor. The estimation unit 22 may use a method of obtaining the observation error $E_{obs}$ using observation information V including the depth. In this case, at least one observation position 201 is necessary.

Example of Estimation Method

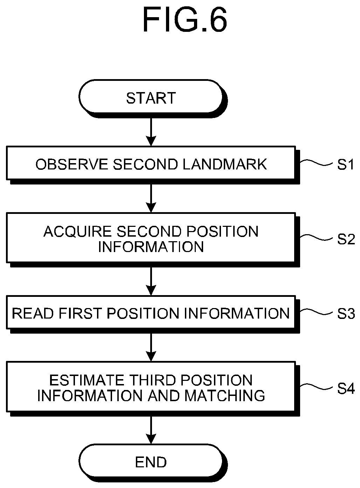

FIG. 6 is a flowchart illustrating an example of the estimation method in the first arrangement. First, the camera 10B observes the second landmark 102 by capturing an image including the second landmark 102 (step S1). Next, the acquisition unit 21 acquires the above-noted second position information from the image captured by the process at step S1 (step S2). Next, the estimation unit 22 reads the first position information of the first landmark 101 from the storage unit 20B (step S3). The example in FIG. 6 is illustrated only by way of example, and the process at step S3 may be performed, for example, concurrently with the processes at step S1 and step S2.

Next, the estimation unit 22 estimates the third position information and the matching between the first landmark 101 and the second landmark 102 by reducing the observation error $E_{obs}$ and the matching error $E_{match}$ according to Equation (1) above (step S4). Specifically, the estimation unit 22 estimates the third position information and the matching between the first landmark 101 and the second landmark 102 such that the observation error $E_{obs}$ of the second landmark 102 in at least one of position or pose specified by the third position information and the matching error $E_{match}$ are reduced.

The position in map of the moving object 10 obtained by the process in the flowchart in FIG. 6 (third position information) can be used, for example, for sophisticated determination using information linked to the map. Specifically, for example, information on a signal or sign that is shielded from or far away from the moving object 10 and fails to be directly observed by the camera 10B and the sensor 10C can be acquired from the map data so that safe operation can be performed in advance. In autonomous driving or a robot, a reference path defined in a map in advance is followed, whereby the path traveled once or the path to a destination can be tracked. The usage of the third position information is not limited thereto.

As described above, in the estimation device 20 in the first arrangement, the storage unit 20B stores first position information indicating at least one of the position in map and the pose of the first landmark 101. The acquisition unit 21 acquires second position information indicating at least one of the position and the around of the second landmark 102 around the moving object 10. The estimation unit 22 estimates third position information indicating at least one of the position in map and the pose of the moving object 10 and the correspondence between the first landmark 101 and the second landmark 102, based on the first position information and the second position information. The estimation unit 22 estimates the third position information and the correspondence such that the observation error $E_{obs}$ of the second landmark 102 in at least one of position or pose specified by the third position information and the matching error $E_{match}$ indicating an error in the correspondence are reduced.

In the estimation device 20 in the first arrangement with this configuration, the accuracy in the estimation processing can be improved even in a situation in which erroneous and ambiguous correspondence may occur in the collation between a landmark in map data (first landmark 101) and the observed landmark (second landmark 102). Specifically, the estimation unit 22 reduces (optimizes) the observation error $E_{obs}$ using the estimated position pose of the moving object 10 and the matching error $E_{match}$ from the matched first landmark 101, for the position in map of the second landmark 102. In this configuration, the map data is matched with the observation data, whereby the correspondence between the landmark in map data (first landmark 101) and the observed landmark (second landmark 102) (collation between landmarks) can be estimated simultaneously when the location in map of the moving object 10 is estimated. That is, it is not necessary to collate the landmarks definitely in advance before the process of estimating the location in map of the moving object 10. The estimation device 20 in the first arrangement can discard inconsistent correspondence based on the observation of the second landmark 102 by the camera 10B and the sensor 10C, and the positional relation between the observed second landmark 102 and the first landmark 101 in map data and, therefore, enables robust self-location estimation even when ambiguous correspondence of landmarks tends to occur by single collation.

Second Arrangement

A second arrangement will now be described. In a description of the second arrangement, the same description as the first arrangement is omitted, and the points different from the first arrangement will be described.

Example of Functional Configuration

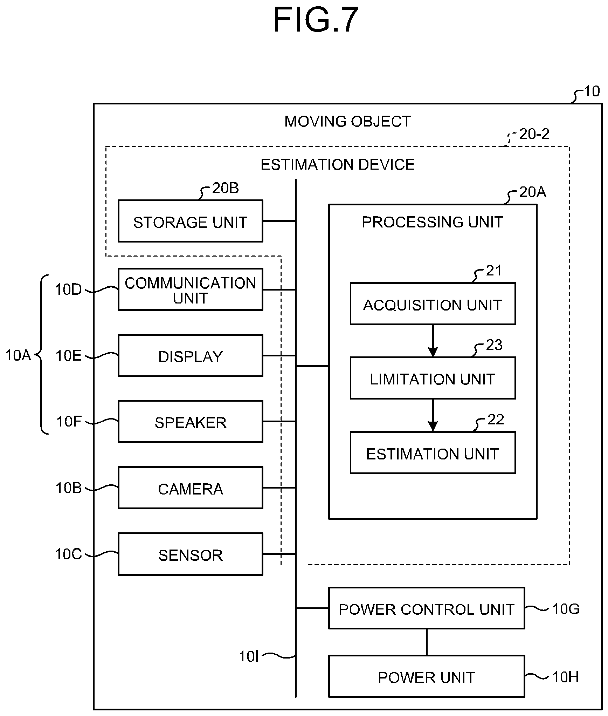

FIG. 7 is a diagram illustrating an example of the functional configuration of the moving object 10 in the second arrangement.

The moving object 10 includes an estimation device 20-2, an output unit 10A, a camera 10B, a sensor 10C, a power control unit 10G, and a power unit 10H. The estimation device 20-2 includes a processing unit 20A and a storage unit 20B.

The processing unit 20A includes an acquisition unit 21, an estimation unit 22, and a limitation unit 23. In the second arrangement, the limitation unit 23 is added.

The limitation unit 23 limits the first landmark 101 to be matched, for each second landmark 102. The limitation unit 23 limits the first landmark 101 to be matched, for example, based on at least one of the position, pose, shape, type, and state of the second landmark 102.

The estimation unit 22 estimates the correspondence between the first landmark 101 limited by the limitation unit 23 and the second landmark 102.

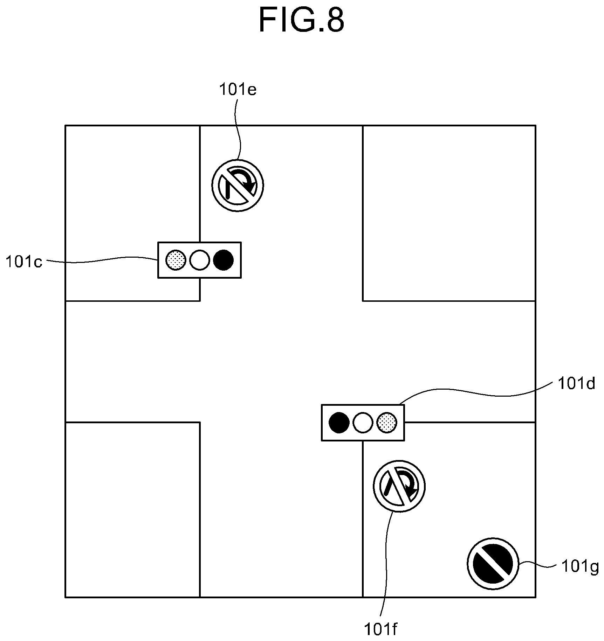

FIG. 8 is a diagram illustrating an example of the first position information in the second arrangement. An example of the first position information in FIG. 8 indicates the positions in map of first landmarks 101c to 101g. The first landmarks 101c and 101d are traffic lights. The first landmarks 101e and 101f are traffic signs indicating No U-Turn. The first landmark 101g is a traffic sign indicating No Parking. In this way, in the example in FIG. 8, three kinds of first landmarks 101 are included. In the foregoing first arrangement, the first landmarks 101 are of one kind.

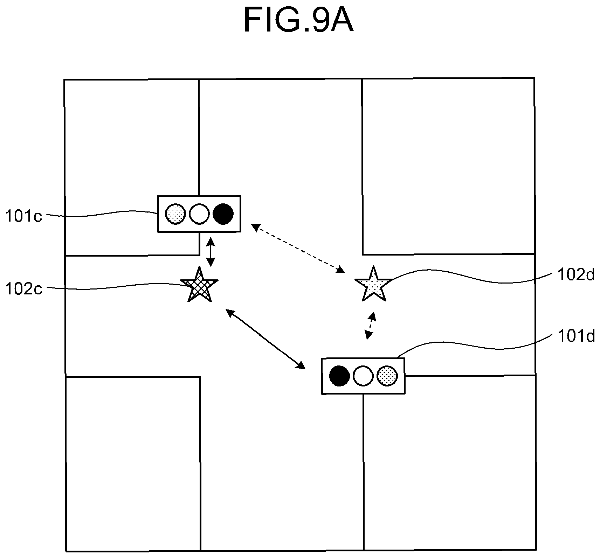

FIGS. 9A to 9C are diagrams illustrating an example of 3the first landmarks 101 limited by the limitation unit 23 in the second arrangement. For example, when the kind of second landmark 102 can be specified from the image captured by the camera 10B, the limitation unit 23 refers to the kinds of first landmarks 101 included in the storage unit 20B and selects only the first landmark 101 with the specified kinds as the target to be matched. The estimation unit 22 estimates the correspondences by limiting the target to be matched to the first landmarks 101 of the same kind.

The example in FIG. 9A illustrates a case where the kind of first landmark 101 is limited to traffic signals. In this case, the first landmarks 101 to be matched with the second landmarks 102c and 102d are limited to the first landmarks 101c and 101d.

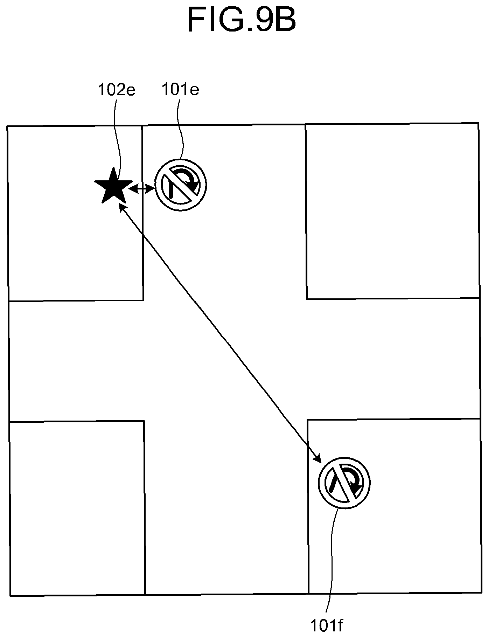

The example in FIG. 9B illustrates a case where the kind of first landmark 101 is limited to a road sign indicating No U-Turn. In this case, the first landmarks 101 to be matched with the second landmark 102e are limited to the first landmarks 101e and 101f.

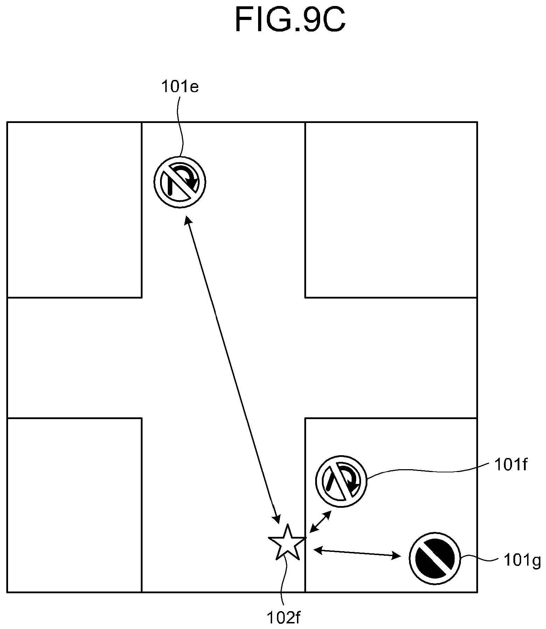

The example in FIG. 9C illustrates a case where the kind of first landmark 101 is limited to those other than traffic lights. When the kind is unable to be limited to one, the kind may be limited as in FIG. 9C such that the kind that can obviously be discarded is removed. In this case, the first landmarks 101 to be matched with the second landmark 102f are limited to the first landmarks 101e to 101g.

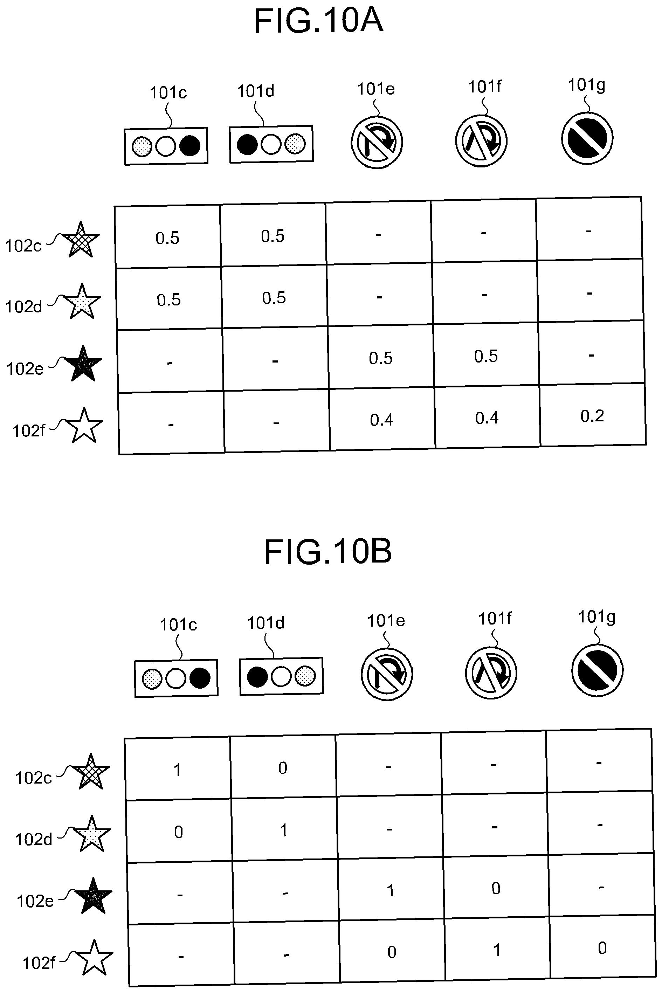

FIG. 10A is a diagram illustrating an example of the weight matrix corresponding to the correspondences in FIGS. 9A to 9C. The limitation unit 23 receives information on the second landmark 102 from the acquisition unit 21 and receives information on the first landmark 101 from the storage unit 20B. The limitation unit 23 extracts a part of the map database by omitting the first landmarks 101 unlikely to be matched, for the second landmarks 102c to 102f. The limitation unit 23 inputs a part of the map database including the remaining first landmarks 101 (see FIGS. 9A to 9C) to the estimation unit 22, for each of the second landmarks 102c to 102f. The estimation unit 22 estimates the above-noted third position information and matching using the weight matrix based on the first landmark 101 in the partially limited map database, for each of the second landmarks 102c to 102f.

FIG. 10B is a diagram illustrating an example of the weight matrix corresponding to the estimation result of the estimation unit 22 in the second arrangement. In the example in FIG. 10B, as a result of the estimation process, the weight of the matched combination is 1, and the weight for the discarded matching is 0.

In the example above, the map database is limited using the kind of first landmark 101. However, any information other than kind may be used for limitation as long as the information is registered in the map database. For example, the approximate position of the second landmark 102 may be used, or the first landmark 101 from which distance to the second landmark 102 is longer than a predetermined distance may be deleted from the map database. For example, the limitation unit 23 may use information of installation such as the orientation of a plane or the height from the road surface or may use a temporal change in state, such as flashing on and off, for limitation. For example, when the shape of the first landmark 101 is available, the limitation unit 23 may use the closeness to the shape as a reference, or when some parts of the second landmark 102 can be observed, the limitation unit 23 may use whether the parts are included as a reference. For example, the limitation unit 23 may use the color or the texture of the first landmark 101 or may put limitations using a character on the first landmark 101.

Although a mode in which a part of the map database is extracted for each second landmark 102 has been described so far, a plurality of map databases may be allocated to one second landmark 102. In this case, the location and pose estimated individually for each map database may be combined in the subsequent process, or the estimation unit 22 may make an estimation while switching the map databases as appropriate.

For example, the storage unit 20B may store a plurality of pieces of map data including first position information. In this case, the limitation unit 23 limits the first landmark 101 to be matched, for each map data. The estimation unit 22 then may estimate the correspondence between the first landmark 101 limited by the limitation unit 23 and the second landmark 102, and the third position information, for each map data.

Example of Estimation Method

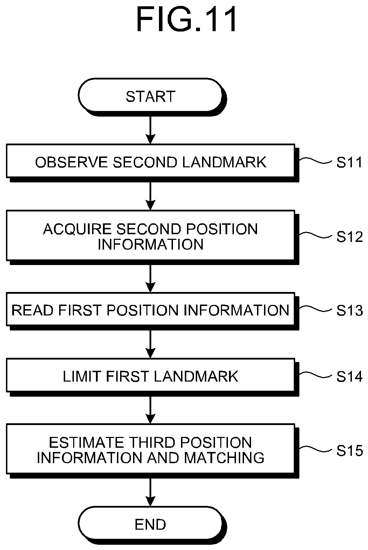

FIG. 11 is a flowchart illustrating an example of the estimation method in the second arrangement. The description of step S11 to step S13 is the same as the description of step S1 to step S3 in the first arrangement and is omitted. The example in FIG. 11 is illustrated only by way of example, and the process at step S13 may be performed, for example, concurrently with the processes at step S11 and step S12.

The limitation unit 23 limits the first landmark 101 to be matched among the first landmarks 101 associated with the first position information read by the process at step S13, based on at least one of the position, pose, shape, and state of the second landmark 102 (step S14).

Next, the estimation unit 22 estimates the above-noted third position information and the matching between the first landmark 101 limited by the process at step S14 and the second landmark 102 (step S15).

As described above, according to the second arrangement, unlike the first arrangement, the position pose of the moving object 10 and the matching between the first landmark 101 and the second landmark 102 can be estimated using a part of the map database limited for each second landmark 102. This configuration can eliminate the first landmark 101 that is obviously not to be matched in advance and therefore enables robust self-location estimation even when erroneous matching tends to occur.

Third Arrangement

A third arrangement will now be described. In a description of the third arrangement, the same description as the first arrangement is omitted, and the points different from the first arrangement will be described.

Example of Functional Configuration

The functional configuration of the moving object 10 in the third arrangement is similar to the first arrangement (see FIG. 2) but differs from the first arrangement in that the acquisition unit 21 further acquires sequential relative position of the moving object 10 and the estimation unit 22 performs an estimation process additionally based on the relative positions. Specifically, in the third arrangement, the moving object 10 moves from moment to moment, and every time the moving object 10 moves, the camera 10B and the sensor 10C perform observation and acquire time-series observation information V. The estimation unit 22 estimates the position pose of the moving object 10 additionally considering the relative positional relation of the observation position 201.

The acquisition unit 21 in the third arrangement further acquires relative motion information indicating at least one of sequential relative position and pose of the moving object 10. The relative motion information indicates, for example, the position pose including rotation of the moving object 10.

The relative motion information may be estimated using the observation information V, for example, using Structure from Motion based on feature points detected from time-series camera images, or may be acquired using the sensor 10C different from the camera 10B as in wheel odometry.

The estimation unit 22 estimates the third position information and the matching such that the above-noted observation error $E_{obs}$, the above-noted matching error $E_{match}$, and a relative motion error indicating an error between at least one of relative position and pose of the moving object 10 specified by the above-noted third position information in time-series and at least one of relative position and pose included in the relative motion information are reduced.

Specifically, the estimation unit 22 applies a constraint such that the relative motion error between the relative position of the moving object 10 estimated from the third position information in time series and the relative position acquired by the acquisition unit 21 is reduced, while reducing the observation error $E_{obs}$ and the matching error $E_{match}$ similarly to the first arrangement. In the first arrangement, a constrain is indirectly applied when the same second landmark 102 is observed at a plurality of observation positions 201, while in the third arrangement, a constraint is directly applied between the observation positions 201 from which the relative motion information is acquired. In the third arrangement, time-series motion is used as a constraint in a range with no or few second landmarks 102, whereby more stable and smooth position estimation can be realized. With this configuration, even when the correspondence is not uniquely determined due to few second landmarks 102, the constraint of the time-series movement of the moving object 10 is explicitly applied, so that the effect of erroneous matching between the second landmark 102 and the first landmark 101 can be reduced.

The relative motion information acquired by the acquisition unit 21 and the coordinate system of the map database are not necessarily defined on the same scale. More specifically, the scale of the coordinate system of the map database may differ from the scale of the coordinate system of the relative motion information.

For example, the map database is on the scale of real space, whereas the relative position pose included in the relative motion information may be defined in a space in which the distance between initial two frames is 1. In this case, the estimation unit 22 estimates (calculates) a scale change in two coordinate systems and reduces the relative position difference after changing one of the relative positions to the scale of the other relative position.

For example, the estimation unit 22 changes the scale of the relative motion information to the scale of the map database and thereafter calculates the relative motion error. With this configuration, even when the acquisition unit 21 acquires the relative motion information on the scale different from the scale of the map database, a constraint on the scale in the map database can be obtained. Here, the scale may be estimated using one scale in the entire scene, or the scale may be estimated for some or one observation position 201. For example, the estimation unit 22 may calculate the scale in calculating the relative motion error, for at least one of the position and the pose of the moving object 10 at each time.

Although a mode in which the estimation device 20 in the third arrangement acquires the third position information and the relative motion information in time series has been described so far, the data used does not necessarily have to be time-series as long as the relative positional relation can be acquired. For example, data of a plurality of cameras 10B and sensors 10C with the relative pose calibrated in advance may be used, or sensor data observed on a plurality of movable bodies 10 may be used.

Example of Estimation Method

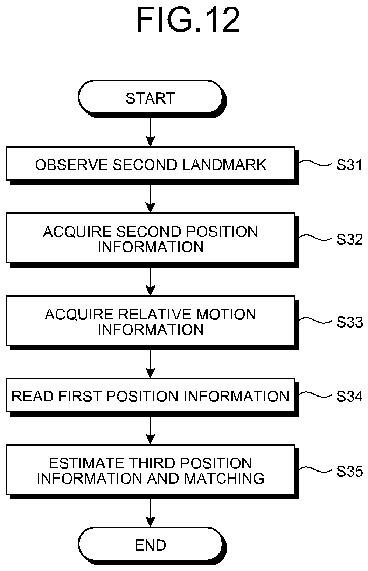

FIG. 12 is a flowchart illustrating an example of the estimation method in the third arrangement. The description of step S31 to step S32 is the same as the description of step S1 to step S2 in the first arrangement and is omitted.

The acquisition unit 21 acquires the relative motion information of the moving object 10 (step S33).

Next, the estimation unit 22 reads the first position information of the first landmark 101 from the storage unit 20B (step S34).

Next, the estimation unit 22 estimates the third position information and the matching between the first landmark 101 and the second landmark 102 such that the observation error $E_{obs}$, the matching error $E_{match}$, and the relative motion error are reduced (step S35).

As described above, in the estimation device 20 in the third arrangement, unlike the first arrangement, the relative positional relation of the observation position 201 of the moving object 10 is used by the estimation unit 22 as a direct constraint. This configuration can increase constraints on the matching of landmarks that can be observed without inconsistency and therefore enables robust self-location estimation even when erroneous matching tends to occur.

Lastly, an example of the hardware configuration of the estimation device 20 in the first to third arrangements is described.

Example of Hardware Configuration

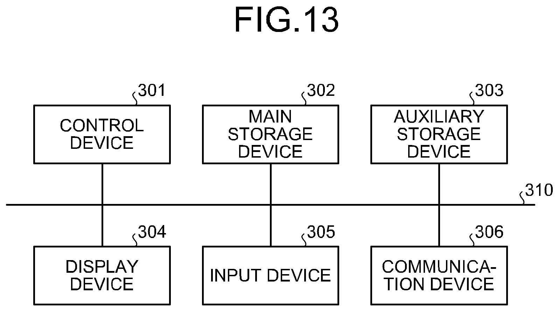

FIG. 13 is a diagram illustrating an example of the hardware configuration of the estimation device 20 (20-2) in the first to third arrangements. The estimation device 20 includes a control device 301, a main storage device 302, an auxiliary storage device 303, a display device 304, an input device 305, and a communication device 306. The control device 301, the main storage device 302, the auxiliary storage device 303, the display device 304, the input device 305, and the communication device 306 are connected through a bus 310.

The display device 304, the input device 305, and the communication device 306 are not necessarily included. For example, when the estimation device 20 is connected to another device, the display function, the input function, and the communication function of the other device may be used.

The control device 301 executes a computer program loaded from the auxiliary storage device 303 to the main storage device 302. The control device 301 is, for example, one or more processors such as CPU. The main storage device 302 is a memory such as read only memory (ROM) and RAM. Examples of the auxiliary storage device 303 include a memory card and a hard disk drive (HDD).

The display device 304 displays information. The display device 304 is, for example, a liquid crystal display. The input device 305 accepts input of information. The input device 305 is, for example, a hardware key. The display device 304 and the input device 305 may be a liquid crystal touch panel serving as the display function and the input function. The communication device 306 communicates with other devices.

The computer program executed in the estimation device 20 is stored in a computer-readable recording medium such as a CD-ROM, a memory card, a CD-R, and a digital versatile disc (DVD) in an installable or executable file format and provided as a computer program product.

The computer program executed in the estimation device 20 may be stored on a computer connected to a network such as the Internet and downloaded via the network. The computer program executed by the estimation device 20 may be provided via a network such as the Internet, without downloading.

The computer program executed in the estimation device 20 may be embedded in, for example, a ROM in advance.

The computer program executed in the estimation device 20 has a module configuration including functions that can be implemented by a computer program, of the functions of the estimation device 20.

The functions implemented by a computer program may be loaded to the main storage device 302 by the control device 301 reading and executing the computer program from a storage medium such as the auxiliary storage device 303. That is, the functions implemented by a computer program are generated on the main storage device 302.

Some of the functions of the estimation device 20 may be implemented by hardware such as IC. The IC is, for example, a processor that executes dedicated processing.

When the functions are implemented using a plurality of processors, each processor may implement one of the functions or may implement two or more of the functions.

While certain arrangements have been described, these arrangements have been presented by way of example only, and are not intended to limit the scope of the invention, as set out in the appended claims. Indeed, the novel arrangements described herein may be embodied in a variety of other forms; furthermore, various omissions, substitutions and changes in the form of the arrangements described herein may be made.

**Claims**

1. An estimation device (20, 20-2) comprising:

   a storage unit (20B) configured to store therein first position information indicating at least one of a position of and a pose of a first landmark (101) in a map;
   an acquisition unit (21) configured to acquire second position information indicating at least one of a position of and a pose of a second landmark (102) in a neighborhood of a moving object (10); and
   an estimation unit (22) configured to estimate, based on the first position information and the second position information, a third position information and a matching between the first landmark (101) and the second landmark (102) the third position information indicating at least one of a position of and a pose of the moving object (10) in the map, **characterized in that**
   the estimation unit (22) is configured to reduce a sum (E) of an observation error ($E_{obs}$) from the second position information of the second landmark (102) using the position / pose (P) of the moving object (10) in the map and a matching error ($E_{match}$) from map data (M) including the first landmark (101), for a three-dimensional point L indicating a position of the second landmark (102) in the map by setting a variable W indicating correspondence between the first landmark (101) and the second landmark (102).

2. The estimation device (20-2) according to claim 1, wherein a plurality of kinds of first landmarks (101) are included in the storage unit (20B), the estimation device (20-2) further comprising:

   a limitation unit (23) configured to limit the first landmark (101) to be matched, for the second landmark (102), wherein
   the estimation unit (22) estimates matching between the first landmark (101) limited by the limitation unit and the second landmark (102).

3. The estimation device (20-2) according to claim 2, wherein the limitation unit (23) limits the first landmark (101) to be matched, based on at least one of position, pose, shape, kind, and state of the second landmark (102).

4. The estimation device according to claim 2, wherein

   the storage unit (20B) stores therein a plurality of pieces of map data including the first position information,
   the limitation unit (23) limits the first landmark (101) to be matched, for each map data, and
   the estimation unit (22) estimates matching between the first landmark (101) limited by the limitation unit and the second landmark (102), and the third position information, for each map data.

5. The estimation device according to claim 1, wherein

   the acquisition unit (21) further acquires relative motion information indicating at least one of a sequential relative position and a pose of the moving object (10),
   and
   the estimation unit (22) further reduces a relative motion error indicating an error between at least one of relative position and pose of the moving object 10 specified by the third position information in time-series and at least one of relative position and pose included in the acquired relative motion information.

6. The estimation device according to claim 5, wherein

   a scale of the relative motion information differs from a scale of the
   map data including the first position information,

and

the estimation unit (22) changes the scale of the relative motion information to the scale of the map data and calculates the relative motion error.

7. The estimation device according to claim 6, wherein the estimation unit (22) calculates a scale in calculating the relative motion error, for at least one of a position and a pose of the moving object (10) at each time.

8. The estimation device according to claim 1, wherein the estimation unit (22) estimates the matching by setting a one-to-one correspondence between the second landmark (102) and the first landmark (101).

9. An estimation method performed by a computer, the method comprising:

storing, in a storage unit (20B), first position information indicating at least one of a position of and a pose of a first landmark (101) in a map;
acquiring second position information indicating at least one of a position of and a pose of a second landmark (102) in a neighborhood of a moving object (10); and
estimating, based on the first position information and the second position information, a third position information and a matching between the first landmark (101) and the second landmark (102) the third position information indicating at least one of a position of and a pose of the moving object (10) in the map, **characterized by** the estimating reducing a sum ($E$) of an observation error ($E_{obs}$) from the second position information of the second landmark (102) using the position pose of the moving object (10) of the map and a matching error ($E_{match}$) from map data ($M$) including the first landmark (101), for a three-dimensional point $L$ indicating a position of the second landmark (102) in the map by setting a variable $W$ indicating correspondence between the first landmark (101) and the second landmark (102).

10. A computer program product having a computer readable medium including programmed instructions, wherein the instructions, when executed by a computer, cause the computer to perform:

storing, in a storage unit (20B), first position information indicating at least one of a position of and a pose of a first landmark (101) in a map;
acquiring second position information indicating at least one of a position of and a pose of a second landmark (102) in a neighborhood of a moving object (10); and
estimating, based on the first position information and the second position information, a third position information and a matching between the first landmark (101) and the second landmark (102) the third position information indicating at least one of a position of and a pose of the moving object (10) in the map, **characterized by** the estimating reducing a sum ($E$) of an observation error ($E_{obs}$) from the second position information of the second landmark (102) using the position / pose ($P$) of the moving object (10) in the map and a matching error ($E_{match}$) from map data ($M$) including the first landmark (101), for a three-dimensional point $L$ indicating a position of the second landmark (102) in the map by setting a variable $W$ indicating correspondence between the first landmark (101) and the second landmark (102).

**Patentansprüche**

1. Eine Schätzvorrichtung (20, 20-2), umfassend:

eine Speichereinheit (20B), die so konfiguriert ist, dass sie erste Positionsinformationen speichert, die mindestens eine Position oder eine Ausrichtung eines ersten Bezugspunkts (101) auf einer Karte angeben;
eine Erfassungseinheit (21), die so konfiguriert ist, dass sie zweite Positionsinformationen erfasst, die mindestens eine Position oder eine Ausrichtung eines zweiten Bezugspunkts (102) in der Nähe eines sich bewegenden Objekts (10) angeben; und
eine Schätzeinheit (22), die so konfiguriert ist, dass sie auf der Grundlage der ersten Positionsinformationen und der zweiten Positionsinformationen dritte Positionsinformationen und eine Zuordnung zwischen dem ersten Bezugspunkt (101) und dem zweiten Bezugspunkt (102) schätzt, wobei die dritten Positionsinformationen mindestens eine Position oder eine Ausrichtung des sich bewegenden Objekts (10) auf der Karte angeben, **dadurch gekennzeichnet, dass** die Schätzeinheit (22) so konfiguriert ist, dass sie eine Summe ($E$) aus einem Beobachtungsfehler (Eobs), der aus den zweiten Positionsinformationen des zweiten Bezugspunkts (102) stammt, unter Verwendung der Position oder Orientierung (P) des sich bewegenden Objekts (10) in der Karte, und einem Übereinstimmungsfehler (Ematch) aus Kartendaten (M), die den ersten Bezugspunkt (101) enthalten, für einen dreidimensionalen Punkt L, der eine Position des zweiten Bezugspunkts (102) in der Karte angibt, reduziert, indem eine Variable W definiert wird, die eine Zuordnung zwischen dem ersten Bezugspunkt (101) und dem zweiten Bezugspunkt (102) angibt.

2. Schätzvorrichtung (20-2) nach Anspruch 1, wobei eine Vielzahl von Typen von ersten Bezugspunkten (101) in der Speichereinheit (20B) enthalten ist, wobei die Schätzvorrichtung (20-2) ferner umfasst:

   eine Begrenzungseinheit (23), die so konfiguriert ist, dass sie den ersten Bezugspunkt (101), der dem zweiten Bezugspunkt (102) zugeordnet werden soll, begrenzt, wobei
   die Schätzeinheit (22) eine Zuordnung zwischen dem durch die Begrenzungseinheit begrenzten ersten Bezugspunkt (101) und dem zweiten Bezugspunkt (102) schätzt.

3. Schätzvorrichtung (20-2) nach Anspruch 2, wobei die Begrenzungseinheit (23) den ersten zuzuordnenden Bezugspunkt (101) auf der Grundlage mindestens eines von Position, Ausrichtung, Form, Typ und Zustand des zweiten Bezugspunkts (102) begrenzt.

4. Schätzvorrichtung nach Anspruch 2, wobei

   die Speichereinheit (20B) eine Vielzahl von Kartendatenelementen speichert, die die ersten Positionsinformationen umfassen,
   die Begrenzungseinheit (23) für jedes der Kartendatenelemente den ersten Bezugspunkt (101) begrenzt, der abzugleichen ist, und
   die Schätzeinheit (22) für jedes der Kartendatenelemente eine Zuordnung zwischen dem durch die Begrenzungseinheit begrenzten ersten Bezugspunkt (101) und dem zweiten Bezugspunkt (102) sowie die dritten Positionsinformationen schätzt.

5. Schätzvorrichtung nach Anspruch 1, wobei

   die Erfassungseinheit (21) ferner Relativbewegungsinformationen erfasst, die mindestens eine sequenzielle Relativposition oder eine Ausrichtung des sich bewegenden Objekts (10) angeben, und
   die Schätzeinheit (22) ferner einen Relativbewegungsfehler reduziert, der einen Fehler zwischen mindestens einer relativen Position oder einer Ausrichtung des sich bewegenden Objekts (10), die durch die dritten Positionsinformationen in einer Zeitreihe spezifiziert sind, und mindestens einer relativen Position oder einer Ausrichtung, die in den erfassten Relativbewegungsinformationen enthalten sind, angibt.

6. Schätzvorrichtung nach Anspruch 5, wobei

   ein Maßstab der Relativbewegungsinformationen sich von einem Maßstab der Kartendaten unterscheidet, die die ersten Positionsinformationen umfassen, und
   die Schätzeinheit (22) den Maßstab der Relativbewegungsinformationen in den Maßstab der Kartendaten umwandelt und den Relativbewegungsfehler berechnet.

7. Schätzvorrichtung nach Anspruch 6, wobei die Schätzeinheit (22) bei der Berechnung des Relativbewegungsfehlers einen Maßstab für mindestens eine der Position und der Ausrichtung des sich bewegenden Objekts (10) zu jedem Zeitpunkt berechnet.

8. Schätzvorrichtung nach Anspruch 1, wobei die Schätzeinheit (22) die Zuordnung schätzt, indem sie eine bijektive Zuordnung zwischen dem zweiten Bezugspunkt (102) und dem ersten Bezugspunkt (101) herstellt.

9. Computerimplementiertes Schätzverfahren, wobei das Verfahren umfasst:

   das Speichern von ersten Positionsinformationen, die mindestens eine Position oder eine Ausrichtung eines ersten Bezugspunkts (101) auf einer Karte angeben, in einer Speichereinheit (20B);
   das Erfassen von zweiten Positionsinformationen, die mindestens eine Position oder eine Ausrichtung eines zweiten Bezugspunkts (102) in der Nähe eines sich bewegenden Objekts (10) angeben; und
   das Schätzen, auf der Grundlage der ersten Positionsinformationen und der zweiten Positionsinformationen, von dritten Positionsinformationen und einer Zuordnung zwischen dem ersten Bezugspunkt (101) und dem zweiten Bezugspunkt (102), wobei die dritten Positionsinformationen mindestens eine Position oder eine Ausrichtung des sich bewegenden Objekts (10) auf der Karte angeben,

**dadurch gekennzeichnet, dass**

die Schätzung eine Summe (E) aus einem Beobachtungsfehler (Eobs), der aus den zweiten Positionsinformationen des zweiten Bezugspunkts (102) stammt, unter Verwendung der Position oder Orientierung (P) des sich bewegenden Objekts (10) auf der Karte, und einem Übereinstimmungsfehler (Ematch) aus Kartendaten (M), die den ersten Bezugspunkt (101) enthalten, für einen dreidimensionalen Punkt L, der eine Position des zweiten Bezugspunkts (102) auf der Karte angibt, reduziert, indem eine Variable W definiert wird, die eine Zuordnung zwischen dem ersten Bezugspunkt (101) und dem zweiten Bezugspunkt (102) angibt.

**10.** Computerprogrammprodukt mit einem computerlesbaren Medium, das programmierte Befehle enthält, wobei die Befehle, wenn sie von einem Computer ausgeführt werden, den Computer veranlassen, Folgendes durchzuführen:

das Speichern von ersten Positionsinformationen, die mindestens eine Position oder eine Ausrichtung eines ersten Bezugspunkts (101) auf einer Karte angeben, in einer Speichereinheit (20B);

das Erfassen von zweiten Positionsinformationen, die mindestens eine Position oder eine Ausrichtung eines zweiten Bezugspunkts (102) in der Nähe eines sich bewegenden Objekts (10) angeben; und

das Schätzen, auf der Grundlage der ersten Positionsinformationen und der zweiten Positionsinformationen, von dritten Positionsinformationen und einer Zuordnung zwischen dem ersten Bezugspunkt (101) und dem zweiten Bezugspunkt (102), wobei die dritten Positionsinformationen mindestens eine Position oder eine Ausrichtung des sich bewegenden Objekts (10) auf der Karte angeben,

**dadurch gekennzeichnet, dass**

die Schätzung eine Summe (E) aus einem Beobachtungsfehler (Eobs), der aus den zweiten Positionsinformationen des zweiten Bezugspunkts (102) stammt, unter Verwendung der Position oder Orientierung (P) des sich bewegenden Objekts (10) auf der Karte, und einem Übereinstimmungsfehler (Ematch) aus Kartendaten (M), die den ersten Bezugspunkt (101) enthalten, für einen dreidimensionalen Punkt L, der eine Position des zweiten Bezugspunkts (102) auf der Karte angibt, reduziert, indem eine Variable W definiert wird, die eine Zuordnung zwischen dem ersten Bezugspunkt (101) und dem zweiten Bezugspunkt (102) angibt.

## Revendications

**1.** Dispositif d'estimation (20, 20-2) comprenant :

une unité de stockage (20B) configurée pour stocker des premières informations de position indiquant au moins une parmi une position et une orientation d'un premier repère (101) sur une carte ;

une unité d'acquisition (21) configurée pour acquérir des deuxièmes informations de position indiquant au moins une parmi une position et une orientation d'un deuxième repère (102) dans un voisinage d'un objet en mouvement (10) ; et

une unité d'estimation (22) configurée pour estimer, sur la base des premières informations de position et des deuxièmes informations de position, des troisièmes informations de position et une correspondance entre le premier repère (101) et le deuxième repère (102), les troisièmes informations de position indiquant au moins une parmi une position et une orientation de l'objet en mouvement (10) sur la carte,

**caractérisé en ce que**

l'unité d'estimation (22) est configurée pour réduire une somme (E) d'une erreur d'observation ($E_{obs}$) provenant des deuxièmes informations de position du deuxième repère (102) en utilisant la position/orientation(P) de l'objet en mouvement (10) dans la carte et d'une erreur de correspondance ($E_{match}$) provenant de données cartographiques (M) incluant le premier repère (101), pour un point tridimensionnel L indiquant une position du deuxième repère (102) dans la carte, en définissant une variable W indiquant une correspondance entre le premier repère (101) et le deuxième repère (102).

**2.** Dispositif d'estimation (20-2) selon la revendication 1, dans lequel une pluralité de types de premiers repères (101) sont inclus dans l'unité de stockage (20B), le dispositif d'estimation (20-2) comprenant en outre :

une unité de limitation (23) configurée pour limiter le premier repère (101) à faire correspondre, pour le deuxième repère (102), dans lequel

l'unité d'estimation (22) estime une correspondance entre le premier repère (101) limité par l'unité de limitation et le deuxième repère (102).

3. Dispositif d'estimation (20-2) selon la revendication 2, dans lequel l'unité de limitation (23) limite le premier repère (101) à faire correspondre, sur la base d'au moins un parmi une position, une orientation, une forme, un type et un état du deuxième repère (102).

4. Dispositif d'estimation selon la revendication 2, dans lequel

l'unité de stockage (20B) stocke une pluralité d'éléments de données cartographiques comprenant les premières informations de position,
l'unité de limitation (23) limite le premier repère (101) à faire correspondre, pour chacune des données cartographiques, et
l'unité d'estimation (22) estime une correspondance entre le premier repère (101) limité par l'unité de limitation et le deuxième repère (102), ainsi que les troisièmes informations de position, pour chacune des données cartographiques.

5. Dispositif d'estimation selon la revendication 1, dans lequel

l'unité d'acquisition (21) acquiert en outre des informations de mouvement relatif indiquant au moins une parmi une position relative séquentielle et une orientation de l'objet en mouvement (10), et
l'unité d'estimation (22) réduit en outre une erreur de mouvement relatif indiquant une erreur entre au moins une parmi une position relative et une orientation de l'objet en mouvement (10) spécifiées par les troisièmes informations de position dans une série temporelle et au moins une parmi une position relative et une orientation incluses dans les informations de mouvement relatif acquises.

6. Dispositif d'estimation selon la revendication 5, dans lequel

une échelle des informations de mouvement relatif diffère d'une échelle des données cartographiques comprenant les premières informations de position, et
l'unité d'estimation (22) convertit l'échelle des informations de mouvement relatif à l'échelle des données cartographiques et calcule l'erreur de mouvement relatif.

7. Dispositif d'estimation selon la revendication 6, dans lequel l'unité d'estimation (22) calcule une échelle lors du calcul de l'erreur de mouvement relatif, pour au moins une parmi une position et une orientation de l'objet en mouvement (10) à chaque instant.

8. Dispositif d'estimation selon la revendication 1, dans lequel l'unité d'estimation (22) estime la correspondance en établissant une correspondance biunivoque entre le deuxième repère (102) et le premier repère (101).

9. Procédé d'estimation mis en œuvre par un ordinateur, le procédé comprenant :

le stockage, dans une unité de stockage (20B), de premières informations de position indiquant au moins une parmi une position et une orientation d'un premier repère (101) sur une carte ;
l'acquisition de deuxièmes informations de position indiquant au moins une parmi une position et une orientation d'un deuxième repère (102) dans un voisinage d'un objet en mouvement (10) ; et
l'estimation, sur la base des premières informations de position et des deuxièmes informations de position, de troisièmes informations de position et d'une correspondance entre le premier repère (101) et le deuxième repère (102), les troisièmes informations de position indiquant au moins une parmi une position et une orientation de l'objet en mouvement (10) sur la carte,
**caractérisé en ce que**
l'estimation réduit une somme ($E$) d'une erreur d'observation ($E_{obs}$) provenant des deuxièmes informations de position du deuxième repère (102) en utilisant la position/orientation ($P$) de l'objet en mouvement (10) sur la carte et une erreur de correspondance ($E_{match}$) provenant des données cartographiques ($M$) incluant le premier repère (101), pour un point tridimensionnel $L$ indiquant une position du deuxième repère (102) sur la carte, en définissant une variable $W$ indiquant une correspondance entre le premier repère (101) et le deuxième repère (102).

10. Produit de programme d'ordinateur comportant un support lisible par ordinateur comprenant des instructions programmées, dans lequel les instructions, lorsqu'elles sont exécutées par un ordinateur, amènent l'ordinateur à effectuer :

le stockage, dans une unité de stockage (20B), de premières informations de position indiquant au moins une parmi une position et une orientation d'un premier repère (101) sur une carte ;

l'acquisition de deuxièmes informations de position indiquant au moins une parmi une position et une orientation d'un deuxième repère (102) dans un voisinage d'un objet en mouvement (10) ; et

l'estimation, sur la base des premières informations de position et des deuxièmes informations de position, de troisièmes informations de position et d'une correspondance entre le premier repère (101) et le deuxième repère (102), les troisièmes informations de position indiquant au moins une parmi une position et une orientation de l'objet en mouvement (10) sur la carte,

**caractérisé en ce que**

l'estimation réduit une somme (E) d'une erreur d'observation ($E_{obs}$) provenant des deuxièmes informations de position du deuxième repère (102) en utilisant la position/orientation (P) de l'objet en mouvement (10) sur la carte et une erreur de correspondance ($E_{match}$) provenant de données cartographiques (M) incluant le premier repère (101), pour un point tridimensionnel L indiquant une position du deuxième repère (102) sur la carte, en définissant une variable W indiquant une correspondance entre le premier repère (101) et le deuxième repère (102).

# FIG.1

# FIG.2

# FIG.3

## FIG.4A

## FIG.4B

# FIG.5A

# FIG.5B

| | 101a | 101b |
|---|---|---|
| 102a | 1.0 | 0.0 |
| 102b | 0.0 | 1.0 |

# FIG.6

```
        ┌─────────────┐
        │    START    │
        └──────┬──────┘
               ↓
   ┌───────────────────────────┐
   │  OBSERVE SECOND LANDMARK  │───── S1
   └─────────────┬─────────────┘
                 ↓
   ┌───────────────────────────┐
   │   ACQUIRE SECOND POSITION │───── S2
   │        INFORMATION        │
   └─────────────┬─────────────┘
                 ↓
   ┌───────────────────────────┐
   │ READ FIRST POSITION INFORMATION │───── S3
   └─────────────┬─────────────┘
                 ↓
   ┌───────────────────────────┐
   │    ESTIMATE THIRD POSITION │───── S4
   │  INFORMATION AND MATCHING  │
   └─────────────┬─────────────┘
                 ↓
        ┌─────────────┐
        │     END     │
        └─────────────┘
```

# FIG.7

MOVING OBJECT — 10

ESTIMATION DEVICE — 20-2

STORAGE UNIT — 20B

PROCESSING UNIT — 20A

ACQUISITION UNIT — 21

LIMITATION UNIT — 23

ESTIMATION UNIT — 22

10D — COMMUNICATION UNIT

10A

10E — DISPLAY

10F — SPEAKER

10B — CAMERA

10C — SENSOR

POWER CONTROL UNIT — 10G

10I

POWER UNIT — 10H

# FIG.8

# FIG.9A

# FIG.9B

# FIG.9C

# FIG.10A

|  | 101c | 101d | 101e | 101f | 101g |
|---|---|---|---|---|---|
| 102c | 0.5 | 0.5 | - | - | - |
| 102d | 0.5 | 0.5 | - | - | - |
| 102e | - | - | 0.5 | 0.5 | - |
| 102f | - | - | 0.4 | 0.4 | 0.2 |

# FIG.10B

|  | 101c | 101d | 101e | 101f | 101g |
|---|---|---|---|---|---|
| 102c | 1 | 0 | - | - | - |
| 102d | 0 | 1 | - | - | - |
| 102e | - | - | 1 | 0 | - |
| 102f | - | - | 0 | 1 | 0 |

# FIG.11

```
        ┌─────────────┐
        │    START    │
        └─────────────┘
               │
               ▼
┌──────────────────────────────┐
│   OBSERVE SECOND LANDMARK     │  ～ S11
└──────────────────────────────┘
               │
               ▼
┌──────────────────────────────┐
│   ACQUIRE SECOND POSITION     │  ～ S12
│        INFORMATION            │
└──────────────────────────────┘
               │
               ▼
┌──────────────────────────────┐
│  READ FIRST POSITION INFORMATION │  ～ S13
└──────────────────────────────┘
               │
               ▼
┌──────────────────────────────┐
│      LIMIT FIRST LANDMARK     │  ～ S14
└──────────────────────────────┘
               │
               ▼
┌──────────────────────────────┐
│    ESTIMATE THIRD POSITION    │  ～ S15
│   INFORMATION AND MATCHING    │
└──────────────────────────────┘
               │
               ▼
        ┌─────────────┐
        │     END     │
        └─────────────┘
```

# FIG.12

```
                        ┌──────────────┐
                        │    START     │
                        └──────┬───────┘
                               │
                               ▼
            ┌──────────────────────────────────┐
            │    OBSERVE SECOND LANDMARK        │ ∿ S31
            └──────────────────┬───────────────┘
                               │
                               ▼
            ┌──────────────────────────────────┐
            │    ACQUIRE SECOND POSITION        │ ∿ S32
            │         INFORMATION               │
            └──────────────────┬───────────────┘
                               │
                               ▼
            ┌──────────────────────────────────┐
            │    ACQUIRE RELATIVE MOTION        │ ∿ S33
            │         INFORMATION               │
            └──────────────────┬───────────────┘
                               │
                               ▼
            ┌──────────────────────────────────┐
            │  READ FIRST POSITION INFORMATION  │ ∿ S34
            └──────────────────┬───────────────┘
                               │
                               ▼
            ┌──────────────────────────────────┐
            │     ESTIMATE THIRD POSITION       │ ∿ S35
            │    INFORMATION AND MATCHING       │
            └──────────────────┬───────────────┘
                               │
                               ▼
                        ┌──────────────┐
                        │     END      │
                        └──────────────┘
```

# FIG.13

| 301 | 302 | 303 |
|---|---|---|
| CONTROL DEVICE | MAIN STORAGE DEVICE | AUXILIARY STORAGE DEVICE |

310

| 304 | 305 | 306 |
|---|---|---|
| DISPLAY DEVICE | INPUT DEVICE | COMMUNICA-TION DEVICE |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008243378 A1
- US 2014297093 A1